# EUROPEAN PATENT APPLICATION

(11) **EP 3 459 363 A1**
(43) Date of publication of application: **27.03.2019**
(21) Application number: 18192707.0
(22) Date of filing: 05.09.2018
(51) Int. Cl.: A23L 21/25

(54) **HONEY POWDER AND METHOD FOR PRODUCTION OF THE POWDER**

(30) Priority: 22.09.2017 TR 201714061
(71) Applicant: Eti Gida Sanayi Ve Ticaret Anonim Sirketi, Eskisehir (TR)
(72) Inventor: KANATLI, AHMET F RUZHAN, ESKISEHIR (TR)
(74) Representative: Yamankaradeniz, Kemal

(57) **Abstract**

Invention relates to honey powder consisting of honey and milk and/ or milk powder and/ or whey and/ or whey powder and/ or cacao powder for use in products such as chocolate and filling products, and production method for it.

## Description

### The Related Art

The invention relates to "honey powder" containing maximum 3 % moisture content, obtained by adding to the end product components for use in chocolate, fat based filling, candy and bakery products, and "method for production of honey powder".

The invention particularly relates to honey powder for use in chocolate, fat based filling, candy and bakery products, having sweetening feature, preserving its natural aroma and nutrition properties, and produced by means of drying with milk and/ or milk powder and/ or whey and/ or whey powder and/ or cacao powder without adding honey to starch, gum like compositions not desired in final product.

### Background of the Invention

Various ingredients are used in solid or liquid form in chocolate, fat based filling, candy and bakery products subject to moisture content of end product and treatable conditions. Components of high moisture content may adversely affect either mixture or dough and rheological and taste features of end product. Particularly use of food compounds of water and high moisture rate in chocolate and chocolate products is avoided. The causes of such case are:
- In end chocolate product, decreasing existence of water to melting temperature of chocolate and reduction of thermal resistance, degradation of rheological features (viscosity, flow point),
- Chocolate; when containing water, sucrose dissolves and causes re - crystallization on the surface, it causes candy whitening in chocolate and changes both physical and taste features of chocolate negatively.
Chocolate are sweetening agents like either crystal group sugar (sucrose) or dried glucose - fructose syrup, one of components used in some products such as fat based filling candy in rigid form in particular. However, the disadvantage of said sweeteners is that they carry nutrient components such as vitamin, mineral etc. together. For that reason, since they only give energy, they are called "empty energy source".

Another sweetening alternative is honey which is in semi - flowing form. Honey is a natural sweetener because of high sugar concentration it has, and it is used in flour products, sweet products and various sauces as colouring agent and natural preserver instead of artificial colouring agents like caramel increasing nutrition value. As shown in Table 1 below, besides constituents of sweeteners features, honey also contains vitamins and minerals in various types (sucrose, fructose, glucose etc.)

**Table 1: Constituents of Honey and their rates**

| *CONSTITUENTS OF HONEY* | *AVERAGE AMOUNT IN 100 g HONEY* |
|---|---|
| *WATER* | 10 - 22 g |
| *TOTAL CARBOHYDRATES* | 75 - 90 g |
| Fructose | 27 - 45 g |
| Glucose | 22 - 40 g |
| Maltose | 3 - 16g |
| *VITAMINS* | |
| Thiamine (B1) | < 0.01 mg |
| Riboflavin (B2) | < 0.3 mg |
| Niacin (B3) | < 0.4 mg |
| Pantotenic acid (B5) | < 0.25 mg |
| Vitamin C | 0.3 - 0.8 mg |
| *MINERALS* | |
| Calcium | 2.5 - 7.5 mg |
| Iron | 0.2 - 0.5 mg |
| Zinc | 0.1 - 0.3 mg |
| Potassium | 25 - 75 mg |
| Phosphorous | 2 - 8 mg |
| Magnesium | 1 - 5 mg |
| Selenium | 0.005 - 0.8 mg |
| Copper | 0.02 - 0.08 mg |
| Chromium | 0.01 - 0.05 mg |
| Manganese | 0.10 - 0.50 mg |

However, because of being fluid with high viscosity and sticky liquid, honey has some difficulties when used in food processes. Particularly when used in products like chocolate, fat based filling products, because of increase in water content, the mixture becomes non - treatable and because of increase in rate of moisture in end product, shelf life problem occurs.

Elimination of such disadvantages and use of honey in such products as sweeteners, enriching agents, preserver or colouring and aroma giving agents is only possible if it is dried and moisture rate is reduced and it is converted into powder. Since upon conversion of honey into powder form, it can be possible to use it as food additive agent and its transportation and storage will also be easier, areas of use will also enhance.

The honey powders obtained in the related art have some disadvantages. One of them is that the fructose of 27- 45 % range as seen in table above causes it to be sticky and thus causes caking. It is because fructose glass transition temperature is low (5 °C). Glassy transition temperature is the temperature limit when agent loses its glassy features and starts to gain viscose features. The lower the glassy transition temperature of agent is the more difficult the drying of such agent because of increase in sticky feature.

Another disadvantage of current embodiments preferred for drying food components such as honey containing fructose is that the maltodextrin used as sticky elimination agent uses agents such as starch, gum, gelatine, silicone dioxide. However, such agents used as drying agents in the related art causes caking.

Maltodextrine is a kind of polysaccharide classified as food additive agent. It is produced by partial hydrolysis of starch. If sweetening level of saccharine is assumed as 100, sweetening levels of maltodextrin molecules having different polymer chain sizes may vary between 5 and 36.

Another disadvantage of said maltodextrin is that it has starch type taste. This may negatively affect physical features (colour, hardness etc.) of end product and taste integrity. In addition, existence of agents such as maltodextrin, starch etc- . in some products such as chocolate etc. changes product quality, melting characteristic of chocolate in mouth, that is, crystal structure and thus affect negatively.

During searches made in literature, one of applications found is the patent application entitled "method for producing dry honey" numbered TR200908388. The invention relates to a method for producing honey powder which is a healthy and delicious product obtained by means of combining and mixing certain materials at certain rates and preparing them in a manner addressing taste of people in food sector. Spraying dryer or cylindrical drier is used in honey powder production. In both methods, additive agents of maltodextrin and silicone dioxide are added into honey appropriately and the obtained mixture is fed into said devices and thus powder honey is obtained.

One of them is patent application numbered CN104824502. Said application relates to dry honey powder and method for production of the powder. In said application, maltodextrin, dissoluble corn starch, lecithin and soya protein isolate are used at rates of (10:1:1:1) as agent aiding drying.

As a result, due to above described disadvantages and inadequacy of existing solutions it has been necessary to make development in the related art of honey powder production.

### Purpose of the Invention

The present invention relates to honey powder and a method for producing such powder meeting the needs mentioned above, eliminating all disadvantages and providing some additional advantages.

Primary purpose of the invention is to provide honey powder for use in chocolate, fat base filling agents, candy and baking products and having sweetening feature, preserving its natural aroma and nutrition features and containing maximum 3 % moisture and production of such powder.

Another purpose of the invention is to provide a honey powder consisting of main constituents of milk and/ or milk powder and/ or whey and/ or whey powder and/ or cacao powder in the end product where honey powder will be used, instead of agents such as maltodextrin, starch, gum, gelatine, silicon dioxide as carrying agents. Because lactose in the milk powder (101 °C) glassy transition temperature is (5 °C) higher in comparison to fructose and cacao powder has 33 % of fibre content on average, the said constituents prevents sticky feature and thus caking in the end product.

A further purpose of the invention is to provide no starch taste in end product as it does not contain maltodextrin. This positively affects physical features (colour, hardness etc.) of end product and taste integrity.

A further purpose of the invention is to decrease the number of unnecessary constituents (for instance maltodextrin free, starch free, gum free etc.) in end product of current milk and/ or milk powder and/ or whey and/ or whey powder and/ or cacao powder in end product where honey powder is used as sticky prevention agent.

A similar purpose of the invention is to provide prevention of sticky by lactose in milk powder and having high glassy temperature and fibre in cacao powder.

A further purpose of the invention is to protect honey's feature of preserving sweetening as well as feature of preserving several nutrients such as vitamin, mineral.

Another purpose of the invention is to provide no need for extra production steps such as encapsulation in order to decrease sticking feature. Thus honey powder production is conducted with less procedure steps.

A similar purpose of the invention is to provide less damage to colour, aroma and nutrition value of the produced honey powder when any one of the systems of drying under vacuum as drying system in particular (belt drier under vacuum, spraying dryer under vacuum etc.) when compared to those dried by use of other conventional methods (belt drier, spraying dryer etc.).

In order to achieve the above described purposes, the invention is a honey powder containing maximum 3 % moisture content and it is characterized in that it contains honey and a member selected from the group consisting of milk, milk powder, whey, whey powder and cacao powder or combinations thereof.

In order to achieve the above mentioned purposes, it is a honey powder production method and it is characterized in that it consists of processes steps of
a) Mixing the honey with a member selected from the group consisting of milk, milk powder, whey, whey powder and cacao powder or combinations thereof.
b) Then subjecting it to drying operation.

The structural and characteristics features of the invention and all advantages will be understood better in detailed descriptions with the figures given below and with reference to the figures, and therefore, the assessment should be made taking into account the said figures and detailed explanations.

### Brief Description of the Drawings

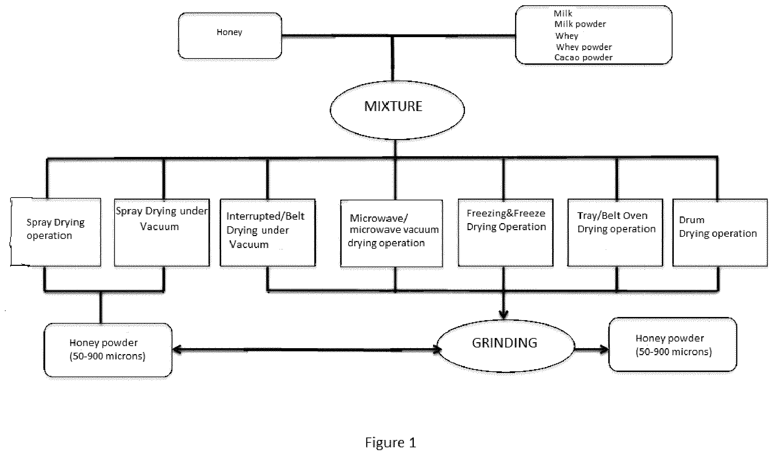

**Figure** 1 is flow chart of production of honey powder.

The drawings are not necessarily to be scaled and the details not necessary for understanding the present invention might have been neglected. In addition, the components which are equivalent to great extent at least or have equivalent functions at least have been assigned the same number.

### Detailed Description of the Invention

In this detailed description, honey powder and method for production of the honey powder being subject of this invention and the preferred embodiments have been disclosed solely for the purpose of better understanding of the subject and described in a manner not causing any restrictive effect.

The invention is a honey powder for use in chocolate, fat base filling agents, candy and baking products and having sweetening feature, preserving its natural aroma and nutrition features and containing maximum 3 % moisture and production of such powder.

The honey powder disclosed under the invention is characterized in that a member selected from the group consisting of milk, milk powder, whey, whey powder and cacao powder or combinations thereof is/ are used as sticking elimination agent in end product where honey powder will be used. Thus sticking of honey powder and thus caking is prevented in end product.

**Content of honey powder being subject of the invention on dry agent basis in mixture before drying:**

| *Raw material* | *By weight quantities that can be used (%)* |
|---|---|
| Honey | 20 - 80 |
| a member selected from the group consisting of milk, milk powder, cacao powder, whey and whey powder or combinations thereof | 80 - 20 |

For instance, in an application of honey powder disclosed under the invention, when 40 % honey is used in the mixture before drying, remaining 60 % of mixture is composed of a member selected from a group consisting of milk and/ or milk powder and/ or cacao powder and/ or whey and/ or whey powder or combinations thereof.

### Raw materials of the invention, and their features:

### Honev

Honey is a natural sweet article collected in honeycomb upon collection of nectars or living parts of plants, secretions of plants or insects living on plants by honey bees and mixing them with their unique agents, dehydrating and leaving in honeycomb for maturation. Honey is divided into two groups, honeydew honey and flower honey based on plant source used by bees.
- **Flower honey,** is obtained as a result of nectars collected from nectarium of flowers by honey bees, mixture of them with the secretion secreted from their glands and maturing it in honeycomb.
- **Honeydew honey** is the article made from secretion of some insects living on plants, collected by honey bees and mixing their secretion and collected in honeycomb after change.

Honey consists of 80 % sugar, 17 % water and organic acids, mineral salts, vitamins, proteins, phenol compounds, fats and other minor compounds such as free amino acids on average. Content of honey also has lactones, vitamins (B1, B2, C and nicotinic acid), pollen, wax and pigment.

Inorganic compounds in the honey are water, potassium (K), calcium (Ca), Magnesium (Mg), copper (Cu), Manganese (Mn), Iron (Fe), Chloride (CI), Sulphur (P) and Silisium (Si (Crane, 1980).

Amino acid quantity of honey is 1 % and proline constitutes major part of it such as 50 - 80 % of total amino acid quantity.

Honey content also has phenol compound of high amount varying subject to plant origin of honey in big amount. Total phenol compound amount of honey and antioxidant activity have a correlation. Honeydew honey total phenolic compound amount is the highest.

Honey contains sugars consisting of fructose and glucose in great amounts (60 - 80) %. Due to the sugar content, honey is of hygroscopic (moisture attracting) feature.

### Sticky eliminating agent (Milk and/ or milk powder and/ or cacao powder and/ or whey and/ or whey powder)

They are the agents used to decrease hygroscopic features during production and storage of honey powder. The added carrying agent changes the physical features of compounds in honey and helps facilitating drying operation.

Milk and/ or milk powder and/ or whey and/ or whey powder and/ or cacao powder compounds are used as carrying agent in end product where honey powder is used during production of honey powder disclosed under the invention. Because lactose being in range of 36 - 52 % (w/ w) in the milk powder (101 °C) glass y transition temperature is (5 °C) higher in comparison to fructose and cacao powder has 33 % of fibre content on average, the said constituents prevents sticky feature and thus caking in the end product.

Particularly, if spraying drying method is used as honey drying method, the agents not only prevent sticking of powder particulates to each other but also sticking of particulates to dryer walls.

### Method for manufacture of honey powder disclosed under the invention:

- Mixture of honey with compounds in form of a member selected from the group consisting of milk, milk powder, whey, whey powder and cacao powder or combinations thereof
- Then subjecting the mixture to drying operation up to moisture content of maximum 3 %,

### Drying process of honey mixture can be achieved in three ways:

- Spraying drying operation is based on spraying liquid samples into hot air ambience and obtaining product in powder form after evaporation of water content therein. While the sprayed sample can be in suspension, emulsion or solution form, the obtained product is in particulate or granular form. It is the sole dryer type where powder particulates of micron size and low moisture content are obtained. If system is operated under vacuum, the drying operation may occur at lower temperatures.

### Spraying Drying Process

Nozzle size: 1 mm
Nozzle pressure: 1000 - 1400 psig
System input temperature: 140 - 170 °C
System output temperature: 75 - 95 °C
Air flow speed: 180 - 220 m³/ hr

### (Parallel currency system)

- The products planned to be dried by use of drum rotating crying technique which is another drying method is dispersed onto cylinder surface heated as homogenous and fine layer. Drying process is conducted on rotating cylinder surface. System is eligible for drying high viscosity and sticky materials. Product structure gets less damage thanks to short contact time on surface reaching high temperature. System also has a scrapping blade to scrap the layer dried on the surface the dried layers scraped by help of blade are ground until particulate size.

### Rotating Drum Drying Process

Cylinder surface temperature: 120 - 180 °C
Product thickness on cylinder (0,01 - 0,05) mm
   - In tray or belt drying operations, porosity cake formation occurs after drying operation. As additional process the big cake masses are to be ground.

### Tray/ Belt Oven Drying Process

Oven temperature: 90 - 130 °C
Time of remaining in oven: 3 - 12 hours

Adding vacuum to drying operation (for instance: spraying drying under vacuum, belt drying under vacuum, vacuum - micro wave drying system etc.) may make it possible to produce honey powder at lower temperature parameters when compared to non - vacuum systems. Drying at lower temperature with vacuum system provides high colour quality, intense aroma and less nutrient value loss.

### Spraying Drying under Vacuum

System input temperature: 50 - 80 °C
Vacuum: 0.5 - 0.6 bar
Nozzle size: 1 mm
Air flow speed: 25 - 30 m³/ hr

### Interval/ Belt Drying under Vacuum:

Condenser temperature: - 50 °C
Pressure: 05 - 40 mbar
Temperature: 70 - 180 °C
Period: 15 - 90 minutes
Belt speed is adjustable.

### Microwave/ Microwave - Vacuum Drying operation

Microwave power: 500 - 850 W
Air temperature: 50 - 125 °C
Vacuum pressure: 20 - 50 mmHg

### Drying by freezing

Freezing the mixture (- 18 - (- 80)°C)
Cake thickness: 4 - 20 mm
Condenser temperature: - 55 °C
Vacuum pressure: 0,018 mBar

### Raw materials rates in honey powder content after drying operation do not change on dry agent basis.

**Honey powder content after drying operation on dry agent basis:**

| Raw material | By weight quantities that can be used (%) |
|---|---|
| Honey | 20 - 80 |
| a member selected from a group consisting of milk and/ or milk powder and/ or whey and/ or whey powder and/ or cacao powder or combinations thereof | 80 - 20 |

- Adding water (water addition is made when milk powder and/ or whey powder and/ or cacao powder is selected in mixture)

Use of water in recipe is subject to drying technique. *If spraying drying method is used in production disclosed under the invention, water is added to initial mixture when milk powder and*/ *or whev powder and*/ *or cacao powder is selected in order to provide easier spraying. In a preferred embodiment of the invention. Water of maximum 88* % *rate can be added.*
- Grinding is made in cases when required.

(Particularly, grinding is to be conducted until reaching 50 - 900 micron size particles of porosity dried honey cake obtained as a result of tray and belt drier.)

When drying temperature is ≥ 110°C in honey powder after drying subject to drying method, caramel taste and aroma may occur subject to caramelization (initial caramelization temperature for fructose 110°C; for galactose, glucose or sacaros sucrose initial caramelization temperature 160°C; for maltos initial caramelization temperature 160°C) Or milk taste and aroma may occur in honey powder due to compounds when milk and/ or milk powder and/ or whey and/ or whey powder is used in mixture.

## Claims

1. The invention is a honey powder containing maximum 3 % moisture content and it is **characterized in that** it contains honey and a member selected from the group consisting of milk, milk powder, whey, whey powder and cacao powder or combinations thereof.

2. A honey powder according to claim 1 and it is **characterized in that** it consist of honey at rate of 20 - 80 % by weight, a member selected from a group consisting of milk and/ or milk powder and/ or cacao powder and/ or whey and/ or whey powder or combinations thereof at rate of 20 - 80 % by weight on dry agent basis.

3. A honey powder production method and it is **characterized in that** it consists of process steps of:
a) Mixing the honey with a member selected from the group consisting of milk, milk powder, whey, whey powder and cacao powder or combinations thereof.
b) then subjecting it to drying operation.

4. A honey powder production method according to claim 3 and it is **characterized in that** in the mixture mentioned in process step a, the honey is in form of an individual member in rate of 20 - 80 % milk and milk powder and/ or whey and/ or whey powder and/ or in rate of 20 - 80 % cacao powder by weight or combinations thereof.

5. Honey powder production method according to claim 3 and it is **characterized in that** honey powder has milk taste and aroma after drying processes mentioned in process step b when milk and/ or milk powder and/ or whey and/ or whey powder is used.

6. Honey powder production method according to claim 3 and it is **characterized in that** the drying operation mentioned in process step b is conducted by means of spraying, spraying under vacuum, interrupted/ belt under vacuum, microwave/ microwave vacuum.

7. Honey powder production method according to claim 3 and it is **characterized in that** when temperature of drying operation mentioned under process step b is ≥ 110°C, caramel taste and aroma is obtained subject to caramelization.

8. Honey powder production method according to claim 3 and it is **characterized in that** when milk powder and/ or whey powder and/ or cacao powder is selected among said raw materials under process step a and spray drying method is preferred as drying operation mentioned under process step b, water of maximum 88 % rate is added to the initial mixture.

9. Honey powder production method according to claim 3 and it is **characterized in that** it is subjected to grinding operation after process step b.

10. Honey powder production method according to claim 3 and it is **characterized in that** the obtained honey powder particulates are 50 - 900 micron.
